# EUROPÄISCHE PATENTSCHRIFT

(11) **EP 2 882 274 B1**
(45) Veröffentlichungstag und Bekanntmachung des Hinweises auf die Patenterteilung: **22.08.2018**
(21) Anmeldenummer: 13703515.0
(22) Anmeldetag: 23.01.2013
(51) Int. Cl.: A01C 7/00, A01B 33/02

(54) **VORRICHTUNG ZUM SCHNEIDEN EINER AUF DER ERDOBERFLÄCHE AUFLIEGENDEN DECKE ORGANISCHEN MATERIALS UND IHRE VERWENDUNG**
DEVICE FOR CUTTING A BLANKET OF ORGANIC MATERIAL LYING ON THE GROUND AND USE THEREOF
DISPOSITIF POUR ENTAILLER UNE COUCHE DE MATIÈRE ORGANIQUE COUCHÉE SUR LA SURFACE DU SOL, ET UTILISATION DE CE DISPOSITIF

(30) Priorität: 07.08.2012 DE 202012102961 U
(43) Veröffentlichungstag der Anmeldung: 17.06.2015
(73) Patentinhaber: live2give gemeinnützige GmbH, 57520 Dickendorf (DE)
(72) Erfinder: MEZYK, Marek, 57520 Dickendorf (DE)
(74) Vertreter: Vièl, Christof
(86) Internationale Anmeldenummer: PCT/DE2013/100024
(87) Internationale Veröffentlichungsnummer: WO 2014/023290

(56) Entgegenhaltungen:
- WO-A1-86/05652
- GB-A- 2 176 982
- US-A- 5 390 745
- US-A- 5 765 649

## Beschreibung

Die Erfindung betrifft eine Vorrichtung zum Schneiden einer auf der Erdoberfläche aufliegenden Decke organischen Materials und ihre Verwendung.

Sie ist dem Bereich Landmaschinen zuzuordnen, insbesondere der Pflanz- und Sätechnik.

Beispielsweise der Gemüsebau stellt im Allgemeinen hohe Anforderungen an die Bodenfruchtbarkeit, die jedoch durch intensive Bewirtschaftung verlorengehen kann. Die Unkrautregulierung ist mit hohem Aufwand verbunden. Der Einsatz von Mulch bietet zu dieser Problematik Lösungen.

Unter Mulch versteht man eine geschlossene Decke organischer Substanz, wie beispielsweise gehäckseltes Gras, Heu, gemulchte/messergewalzte Zwischenfrüchte etc. in verschiedenen Auflagehöhen, es handelt sich hierbei nicht um Mulchfolien.

Die Vorteile beim Einsatz von Mulch sind folgende:
- Erhebliche Reduzierung des Unkrautvorkommens,
- Versorgung von Boden und Pflanzen mit Nährstoffen,
- Konstanthaltung von Temperatur und Feuchtigkeit des Bodens,
- Schutz vor extremen physikalischen Einflüssen wie bspw. Wind, Wasser und Sonneneinstrahlung,
- Förderung des Bodenlebens.

Um diese Vorteile nutzen zu können, ist es wichtig, dass die Mulchdecke auch beim Pflanzen oder Säen erhalten bleibt.

Herkömmliche Pflanz- und Sämaschinen sind ab einer bestimmten Auflagehöhe und Konsistenz der geschlossenen Mulchdecke nicht in der Lage, durch sie hindurch zu pflanzen oder zu säen.

Beim Einsatz konventioneller Maschinen kann der Mulch in die Pflanz- oder Saatrille gedrückt oder Erde freigelegt werden. Außerdem drohen die Maschinen selbst durch aufgestauten Mulch zu verstopfen.
Die Aufgabe der Erfindung besteht darin, eine Vorrichtung zu schaffen, die das Pflanzen oder Säen auch bei Vorliegen einer geschlossenen Mulchdecke ermöglicht.
Aus der WO 86/05652 A1 ist eine landwirtschaftliche Maschine für die Bodenbearbeitung bekannt, die in Bewegungsrichtung eine erste Reihe von quer zur Bewegungsrichtung angeordneten Schneidrädern mit im Wesentlichen horizontaler Achse hat, vor denen eine zylindrische Rolle angeordnet ist, und mit deren Hilfe Unkraut und/oder Rückstände eines vorhergegangenen Anbaus, wie Stengel, Stoppeln und dergleichen zerkleinert werden können. Eine nachfolgende, in Querrichtung angeordnete Reihe von Aufreißorganen mit Messern, die vorzugsweise zugespitzt verlaufen, dient zum Aufreißen und Auflockern des Bodens, ohne diesen dabei umzupflügen und ist mit Pflugstreifenblechen verbunden, die ein teilweises Umpflügen des aufgelockerten Bodens durchführen. Eine weitere Reihe von Rotorwerkzeugen mit im Wesentlichen horizontaler Achse hat die Funktion einer Egge und dient zum abschließenden Umpflügen um 180° und zum Zerkrümeln des Bodens.
Die US 5,765,649 A beschreibt eine Vorrichtung zum Lockern des Bodens insbesondere von Zuckerrohrplantagen, welche zwei Klauen aufweist, deren oberer Bereich beabstandet ist und die im unteren Bereich, der in den Boden eindringt, verbunden sind und eine Schneidvorrichtung aufweist. Diese Aufgabe wird im Rahmen der Erfindung dadurch gelöst, daß die Vorrichtung eine nachfolgende Pflanz- oder Sämaschine umfaßt, wobei an einem Rahmen ein Schneidwerk umfassend mindestens ein angetriebenes Messer und eine Schutzvorrichtung zum Vermeiden des Kontaktes des Messers mit Erde und zum Abweisen von harten Gegenständen vorgesehen sind, wobei die Schutzvorrichtung so ausgebildet ist, daß durch sie dem Messer Mulch zuführbar ist und das Schneidwerk zum Schneiden einer geschlossenen Mulchdecke und zum Offenhalten des Schlitzes bis zu der nachfolgenden Pflanz- oder Sämaschine ausgebildet ist. Die Erfindung bezieht sich ebenfalls auf die Verwendung einer solchen Vorrichtung zum Schneiden einer auf der Erde aufliegenden Decke organischen Materials. Bei der Erfindung handelt es sich um ein Schneidwerk als Teil einer Vorrichtung, die im Folgenden auch "Reihenmulchschneider" genannt wird. Das Schneidwerk schneidet die geschlossene Mulchdecke auf und hält den Schlitz bis zum Schar der nachfolgenden konventionellen Pflanz- oder Sämaschine offen.

Die Erfindung kann in der Agrarwirtschaft, beispielsweise in Gemüsebaubetrieben, in deren Produktion Mulch zur Abdeckung des Bodens verwendet wird, zum Einsatz kommen.

Durch die Erfindung wird beispielsweise den Gemüsebaubetrieben die Möglichkeit geboten, Mulch zur Bodenabdeckung zu verwenden und weiterhin konventionelle Maschinen zum Pflanzen und Säen einzusetzen. Der Einsatz von Mulch steigert die Bodenfruchtbarkeit nachhaltig.

Es ist vorteilhaft, daß an der Rückseite der Schutzvorrichtung eine zumindest vertikal bewegliche und den Schnitt zum Schar einer nachfolgenden Pflanz- oder Sämaschine offenhaltende Führungsschiene befestigbar ist.

Weiterhin ist zur Erfindung gehörig, daß die Schutzvorrichtung über ein Parallelogramm stets horizontal zur Bodenebene ausgerichtet und mittels eines Tastrades in gleichbleibendem Abstand zur Bodenoberfläche führbar ist.

Es liegt im Rahmen der Erfindung, daß ein im vorderen Bereich des Rahmens eine vorzugsweise als Dreipunkt ausgebildete Anhängevorrichtung zum Anhängen der Vorrichtung an eine Zugmaschine vorgesehen ist.

Gleichermaßen ist es zweckmäßig, daß ein im hinteren Bereich des Rahmens vorzugsweise als Dreipunkt ausgebildete Anhängevorrichtung zum Anhängen einer weiteren Maschine, insbesondere einer Pflanz- oder Sämaschine, vorgesehen ist.

Gleichermaßen ist es möglich, daß im hinteren Bereich der erfindungsgemäßen Vorrichtung eine Pflanz- oder Sämaschine direkt mit dieser verbunden ist. So kann die Mulchlage aufgeschnitten und sofort im gleichen Arbeitsgang neu eingesät oder eingepflanzt werden. Dies erspart einen weiteren Arbeitsgang und schont den Boden durch geringeres Befahren mit schwerem Gerät. Die hierdurch erzielten Kosteneinsparungen sind erheblich.

In diesem Zusammenhang ist es vorteilhaft, daß im hinteren Bereich des Rahmens Unterlenkerfanghaken und ein Oberlenker vorgesehen sind.

Es ist zweckmäßig, daß das Messer in einem Winkel, bevorzugt rechtwinklig, zum Boden angeordnet ist und es als in Fahrtrichtung oder entgegen der Fahrtrichtung rotierendes Messerrad, als in Fahrtrichtung oder entgegen der Fahrtrichtung rotierendes Kreismesser oder als sägendes Messer ausgebildet ist.

Weiterhin liegt es im Rahmen der Erfindung, daß Mittel zum Übertragen der Kraft von der Zapfwelle der Zugmaschine zu dem Messer vorgesehen sind.

Die Kraftübertragung kann mechanisch, beispielsweise über eine Welle, hydraulisch, pneumatisch oder elektrisch erfolgen.

Eine Ausbildung der Erfindung ist dadurch gekennzeichnet, daß das Messer als Messerrad ausgebildet ist, das zwei Scheiben umfaßt, zwischen denen mindestens ein, bevorzugt mindestens zwei und besonders bevorzugt mindestens drei freidrehend gelagerte Schneidmesser angeordnet sind.

Zur Erfindung gehörig ist auch, daß die Führungsschiene mittels einer Schnellkupplung an dem hinteren Ende der Schutzvorrichtung befestigbar ist.

Es ist erfindungsgemäß, daß am Rahmen mindestens ein Stützrad, bevorzugt zwei Stützräder, höhenverstellbar befestigt sind.

Schließlich liegt im Rahmen der Erfindung auch die Verwendung einer erfindungsgemäßen Vorrichtung zum Schneiden einer auf der Erde aufliegenden Decke organischen Materials und neuen Einsäen oder Einpflanzen in einem Arbeitsgang.

Nachfolgend wird ein Ausführungsbeispiel der Erfindung (nachfolgend als "Reihenmulchschneider" bezeichnet) anhand von Zeichnungen erläutert.

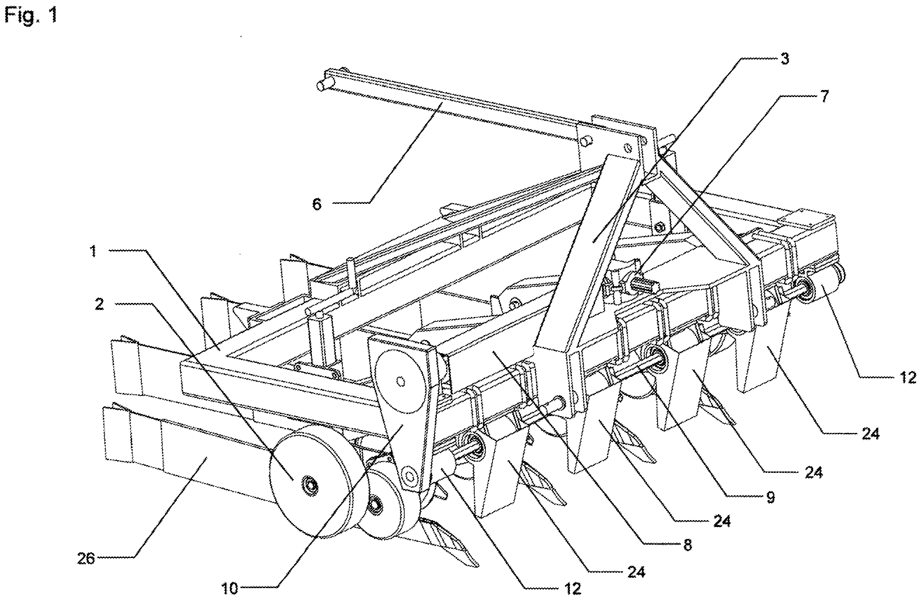

Es zeigen
- Fig. 1:: eine Frontansicht eines erfindungsgemäßen Reihenmulchschneiders,

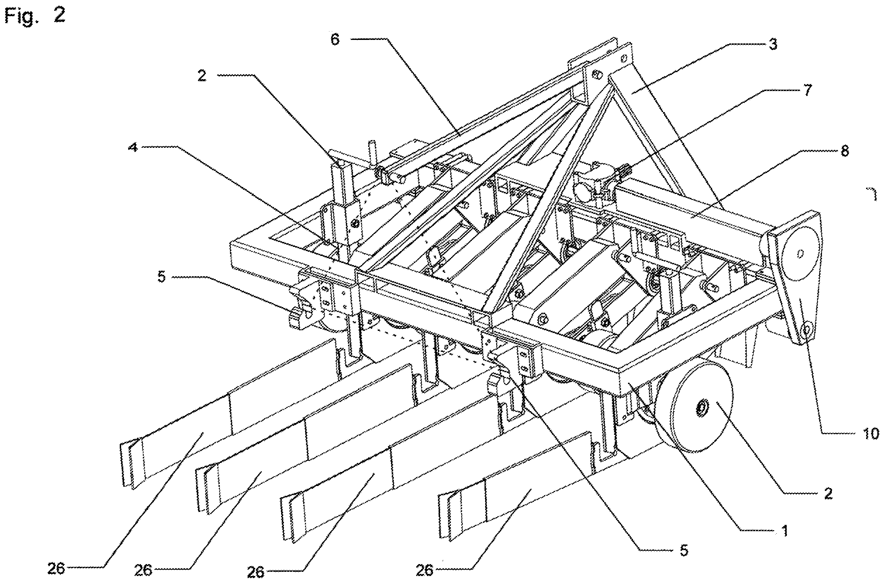

- Fig. 2:: eine Rückansicht des Reihenmulchschneiders,
- Fig. 3:: das Schneidwerk mit Schutzblech (rechte Seite)
- Fig. 4:: das teilzerlegte Schneidwerk (linke Seite),

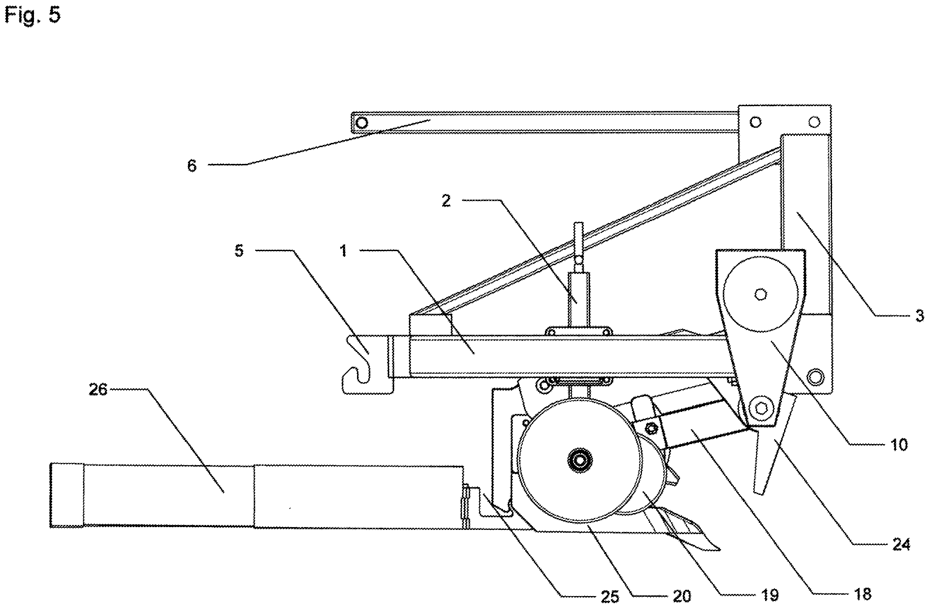

- Fig. 5:: eine Seitenansicht des Reihenmulchschneiders,

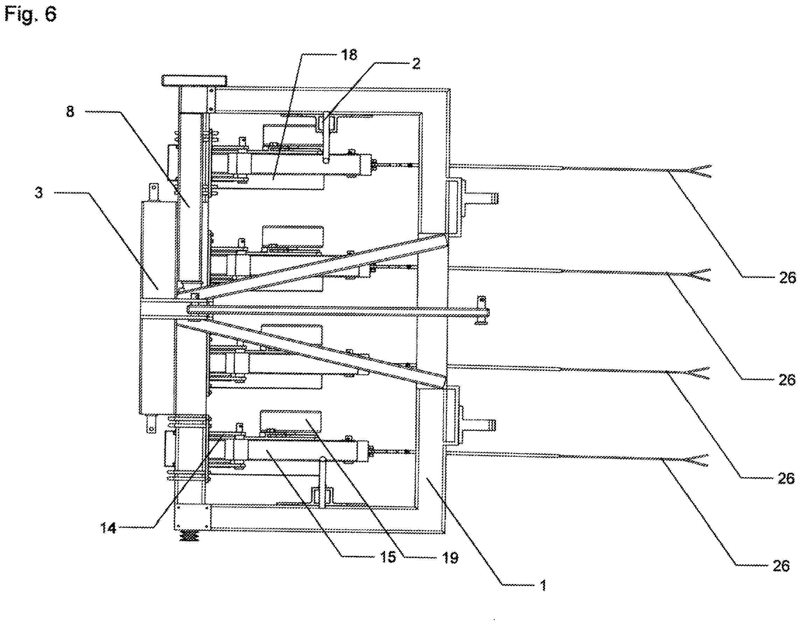

- Fig. 6:: eine Draufsicht auf den Reihenmulchschneider und

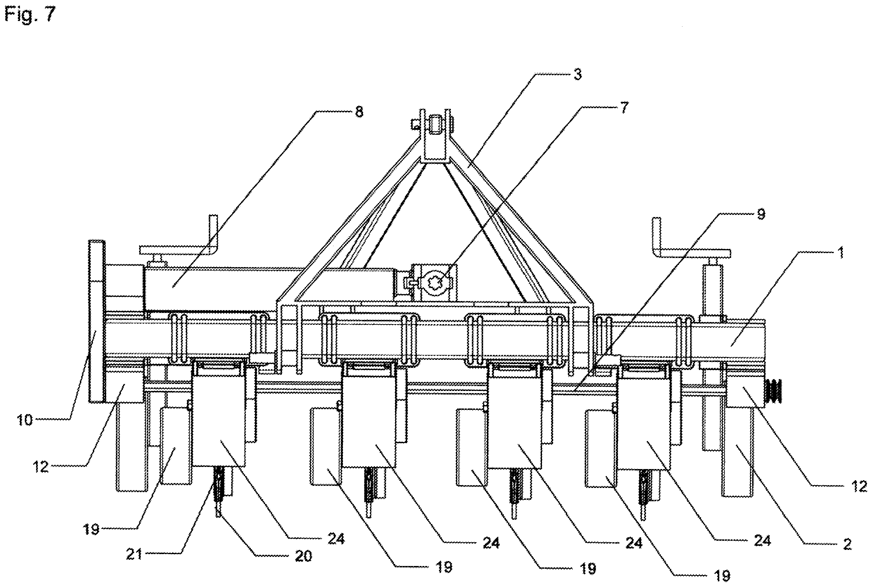

- Fig. 7:: eine weitere Frontansicht des Reihenmulchschneiders.

Der Reihenmulchschneider verfügt über einen rechteckigen Rahmen (1) aus Vierkantrohr. Am Rahmen (1) sind zwei stufenlos mit Kurbeln höhenverstellbare Stützräder (2) befestigt mit denen das Höhenniveau der nachfolgenden Pflanz- oder Sämaschine bestimmt werden kann.

Die Aufhängung an der Zugmaschine erfolgt beispielsweise durch einen Dreipunkt (3). Im Heck der Vorrichtung besteht die Möglichkeit, wiederum an einem Dreipunkt (4) eine weitere Maschine, insbesondere eine Pflanz- oder Sämaschine anzuhängen; hierfür sind Unterlenkerfanghaken (5) angeschraubt und ein Oberlenker (6) vorgesehen.

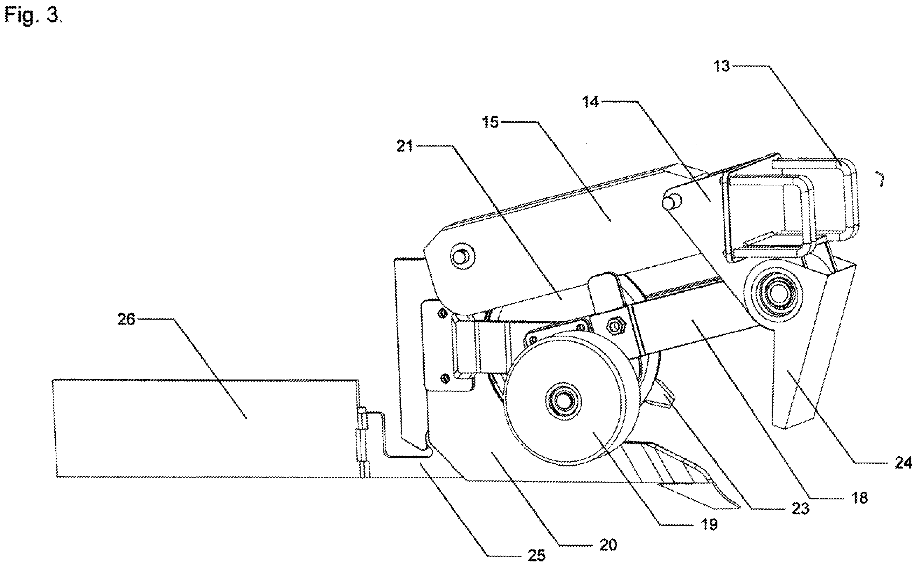

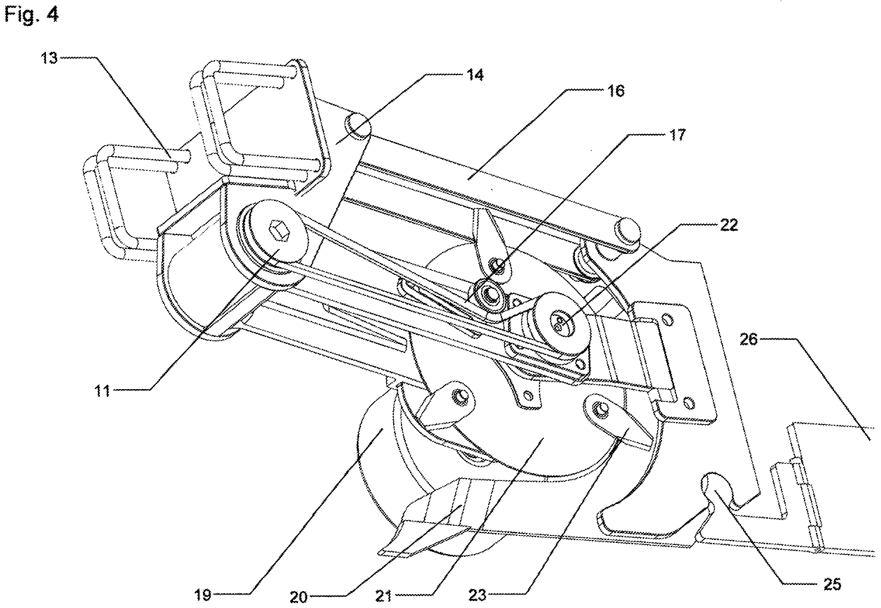

Die Übertragung der zum Antrieb der Schneidwerke (Fig. 3 bzw. Fig. 4, bei der zur besseren Ansicht gegenüber Fig. 3 folgende Teile entfernt wurden: Linke Hälfte der Schutzvorrichtung (20), linke Messerradscheibe, oberes Schutzblech (15), Frontschutzblech (24), Keilriemenabdeckung) erforderlichen Kraft erfolgt mittels Zapfwelle der Zugmaschine über ein Winkelgetriebe (7), eine Antriebswelle (8) sowie über eine Keilriemenübersetzung (10) an eine unter dem Rahmen (1) liegende 6-Kantwelle (9), auf der jeweils die Antriebsriemenscheibe (11) des einzelnen Schneidwerkes (Fig. 3 bzw. Fig. 4) verschiebbar gelagert ist. Die Kraftübertragung innerhalb des Schneidwerkes (Fig. 3 bzw. Fig. 4) erfolgt mittels Keilriemen (17) an die Welle des Messerrades (21).

Das jeweilige Schneidwerk (Fig. 3 bzw. Fig. 4) besteht aus einem Schneidwerkhalter (14), der am Rahmen (1) mit Bügelschrauben (13) befestigt ist und zur Aufnahme der das Messerrad (21) führenden Schwinge (18) dient.

Das Messerrad (21) setzt sich aus zwei Scheiben zusammen, zwischen denen drei aus Kollisionsschutzgründen freidrehend gelagerte Schneidmesser (23) angeordnet sind. Die beiden Scheiben sind an der beidseitig in der Schwinge (18) gelagerten Messerradwelle (22) angeflanscht.

Die durch Fliehkraft sich ausrichtenden Schneidmesser (23) werden zum Teil in einer Schutzvorrichtung (20) (die auch als "Schutz-Schar" (20) bezeichnet werden kann) geführt, deren Aufgabe es ist, Kontakt mit Erde zu vermeiden und harte Gegenstände, bspw. Steine, abzuweisen. Mit Hilfe des an der Schwinge (18) angebrachten Tastrades (19) wird die Abstimmung so gewählt, daß die Schutzvorrichtung (20) in die Erde eintaucht, den zu schneidenden Mulch anhebt und dem sich oberhalb der Bodenoberfläche befindlichen Messerrad (21) zuführt.

Um Stauungen des Schnittgutes vorzubeugen, dreht sich das Messerrad (21) entgegen der Fahrtrichtung. Die Schutzvorrichtung (20) wird stets horizontal ausgerichtet, um unabhängig von der Auslenkung der Schwinge (18) optimale Schnittbedingungen sicherzustellen. Dazu ist es drehbar um die Drehachse des Messerrades (21) gelagert und durch einen in das mit dem Schneidwerkhalter (14) verbundene obere Schutzblech (15) integrierten Oberlenker (16) nach dem Parallelogramm-Prinzip geführt.

An dem hinteren unteren Ende der Schutzvorrichtung (20) wird mittels einer Schnellkupplung (25) die ausziehbare Führungsschiene (26) angehängt, die den Schnitt bis zum Schar der nachfolgenden Maschine offen hält. Die Schnellkupplung (25) ermöglicht, daß die Führungsschiene (26) nach oben und seitlich schwenken kann, um ebenfalls Bodenunebenheiten auszugleichen.

### Bezugszeichenliste

- 1: Rahmen
- 2: Stützrad mit Kurbel
- 3: Dreipunkt Front
- 4: Dreipunkt Heck
- 5: Unterlenkerfanghaken
- 6: Oberlenker
- 7: Winkelgetriebe mit Zapfwellenanschluß
- 8: Antriebswelle
- 9: 6-Kantwelle
- 10: Keilriemenübersetzung
- 11: Antriebsriemenscheibe
- 12: 6-Kantwellen-Außenlager
- 13: Bügelschrauben
- 14: Schneidwerkhalter
- 15: Schutzblech
- 16: Parallelogramm
- 17: Keilriemen
- 18: Schwinge
- 19: Tastrad
- 20: Schutzvorrichtung
- 21: Messerrad
- 22: Messerradwelle
- 23: Frei drehbare Schneidmesser
- 24: Frontschutzblech
- 25: Schnellkupplung
- 26: Führungsschiene

## Patentansprüche

1. Vorrichtung zum Schneiden einer auf der Erdoberfläche aufliegenden Decke organischen Materials, **dadurch gekennzeichnet, daß** die Vorrichtung eine nachfolgende Pflanz- oder Sämaschine umfaßt, wobei an einem Rahmen (1) ein Schneidwerk umfassend mindestens ein angetriebenes Messer (21) und eine Schutzvorrichtung (20) zum Vermeiden des Kontaktes des Messers (21) mit der Erde und zum Abweisen von harten Gegenständen vorgesehen sind, wobei die Schutzvorrichtung (20) so ausgebildet ist, daß durch sie dem Messer (21) Mulch zuführbar ist und das Schneidwerk zum Schneiden einer geschlossenen Mulchdecke und zum Offenhalten des Schlitzes bis zu der nachfolgenden Pflanz- oder Sämaschine ausgebildet ist.

2. Vorrichtung gemäß Anspruch 1, **dadurch gekennzeichnet, daß** an der Rückseite der Schutzvorrichtung (20) eine zumindest vertikal bewegliche und den Schnitt zum Schar einer nachfolgenden Pflanz- oder Sämaschine offenhaltende Führungsschiene (26) befestigbar ist.

3. Vorrichtung gemäß einem der Ansprüche 1 oder 2, **dadurch gekennzeichnet, daß** die Schutzvorrichtung (20) über ein Parallelogramm stets horizontal zur Bodenebene ausgerichtet und mittels eines Tastrades (19) im gleichbleibendem Abstand zur Bodenoberfläche führbar ist.

4. Vorrichtung gemäß einem der Ansprüche 1 bis 3, **dadurch gekennzeichnet, daß** im vorderen Bereich des Rahmens (1) eine vorzugsweise als Dreipunkt (3) ausgebildete Anhängevorrichtung zum Anhängen der Vorrichtung an eine Zugmaschine vorgesehen ist.

5. Vorrichtung gemäß einem der Ansprüche 1 bis 4, **dadurch gekennzeichnet, daß** ein im hinteren Bereich des Rahmens (1) vorzugsweise als Dreipunkt (4) ausgebildete Anhängevorrichtung zum Anhängen einer weiteren Maschine, insbesondere der Pflanz- oder Sämaschine, vorgesehen ist.

6. Vorrichtung gemäß einem der Ansprüche 1 bis 4, **dadurch gekennzeichnet, daß** im hinteren Bereich der Vorrichtung die Pflanz- oder Sämaschine direkt mit dieser verbunden ist.

7. Vorrichtung gemäß einem der Ansprüche 1 bis 6, **dadurch gekennzeichnet, daß** im hinteren Bereich des Rahmens (1) Unterlenkerfanghaken (5) und ein Oberlenker (6) vorgesehen sind.

8. Vorrichtung gemäß einem der Ansprüche 1 bis 7, **dadurch gekennzeichnet, daß** Mittel (7, 8, 10, 9, 11, 17) zum Übertragen der Kraft von der Zapfwelle der Zugmaschine zu dem Messer (21) vorgesehen sind.

9. Vorrichtung gemäß einem der Ansprüche 1 bis 8, **dadurch gekennzeichnet, daß** das Messer (21) in einem Winkel, bevorzugt rechtwinklig zum Boden angeordnet ist und es als in Fahrtrichtung oder entgegen der Fahrtrichtung rotierendes Messerrad, als in Fahrtrichtung oder entgegen der Fahrtrichtung rotierendes Kreismesser oder als sägendes Messer ausgebildet ist.

10. Vorrichtung gemäß einem der Ansprüche 1 bis 9, **dadurch gekennzeichnet, daß** das Messer (21) als Messerrad ausgebildet ist, das zwei Scheiben umfaßt, zwischen denen mindestens ein, bevorzugt mindestens zwei und besonders bevorzugt mindestens drei freidrehend gelagerte Schneidmesser (23) angeordnet sind.

11. Vorrichtung nach dem Anspruch 2 und einem der Ansprüche 3 bis 10, **dadurch gekennzeichnet, daß** die Führungsschiene (26) mittels einer Schnellkupplung (25) an dem hinteren Ende der Schutzvorrichtung (20) befestigbar ist.

12. Vorrichtung gemäß einem der Ansprüche 1 bis 11, **dadurch gekennzeichnet, daß** am Rahmen (1) mindestens ein Stützrad (2), bevorzugt zwei Stützräder (2), höhenverstellbar befestigt sind.

13. Verwendung einer Vorrichtung gemäß einem der Ansprüche 1 bis 12 zum Schneiden einer auf der Erde aufliegenden Decke organischen Materials und neuen Einsäen oder Einpflanzen in einem Arbeitsgang.

## Claims

1. A device for cutting a blanket of organic material lying on the ground, **characterized in that** the device includes a downstream planting or sowing machine, wherein a cutting unit including at least one driven blade (21) and a protective device (20) for avoiding contact of the blade (21) with the soil and for shielding against hard items is provided on a frame (1), wherein the protective device (20) is formed in such a way, that mulch can be fed to the blade (21) by means of the said protective device and the cutting unit is configured for cutting of a closed mulch blanket and for keeping a slit open all the way to the downstream planting or sowing machine.

2. The device according to claim 1, **characterized in that** at least one vertically-movable guide rail (26) keeping open the cut to the coulter of a downstream plating or sewing machine can be fixed to the rear side of the protective device (20).

3. The device according to one of claims 1 or 2, **characterized in that** the protective device (20) is oriented horizontally to the ground plane through a parallelogram at any moment, and can be guided at a constant distance to the ground surface by means of a feeler wheel (19).

4. The device according to one of claims 1 to 3, **characterized in that** a hitch, preferably configured as a three-point hitch (3), for coupling the device to a tractor machine is provided.

5. The device according to one of claims 1 to 4, **characterized in that** a hitch, preferably configured as a three-point (4) hitch, for attaching a further machine, in particular the planting or sewing machine, is provided in the rear area of the frame (1).

6. The device according to one of claims 1 to 4, **characterized in that** in the rear area of the device, the planting or sewing machine is directly connected to said device.

7. The device according to one of claims 1 to 6, **characterized in that** lower link catch hooks (5) and an upper link (6) are provided in the rear area of the frame (1).

8. The device according to one of claims 1 to 7, **characterized in that** means (7, 8, 10, 9, 11, 17) are provided for transmitting the force from the power takeoff shaft of the tractor machine to the blade (21).

9. The device according to one of claims 1 to 8, **characterized in that** the blade (21) is arranged at an angle, preferably at a right angle, relative to the ground and that it is formed as a blade wheel rotating in the driving direction or against the driving direction, as a circular blade rotating in the driving direction or against the driving direction, or as a saw blade.

10. The device according to one of claims 1 to 9, **characterized in that** the blade (21) is formed as a blade wheel including two discs, between which at least one, preferably at least two, and particularly preferably at least three cutting blades (23) are arranged in manner to be supported freely-rotatable.

11. The method according to claim 2 and one of claims 3 to 10, **characterized in that** the guide rail (26) can be fastened to the rear end of the protective device (20) by means of a quick coupling device (25).

12. The device according to one of claims 1 to 11, **characterized in that** at least one support wheel (2), preferably two support wheels (2), are fastened to the frame (1) in a height-adjustable manner.

13. Use of a device according to one of claims 1 to 12 for cutting a blanket of organic material lying on the ground and re-seeding or re-planting in one working operation.

## Revendications

1. Dispositif pour entailler une couverture de matière organique étendue sur la surface du sol, **caractérisé en ce que** le dispositif comprend en aval une machine à planter ou à semer, une unité de coupe étant prévue sur un bâti (1) laquelle unité de coupe comprend au moins une lame entraînée en mouvement (21) et un dispositif de protection (20) pour éviter un contact de la lame (21) avec la terre et pour rejeter des objets durs, le dispositif de protection (20) étant conçu de telle sorte que par lui du mulch peut être amené à la lame (21) et l'unité de coupe étant conçue pour entailler une couverture de mulch continue et pour maintenir ouverte la fente jusqu'à la machine à planter ou à semer qui suit.

2. Dispositif selon la revendication 1, **caractérisé en ce qu'**un rail de guidage (26) mobile au moins verticalement et maintenant ouvert la fente pour le soc d'une machine à planter ou à semer qui suit peut être fixé à l'arrière du dispositif de protection (20).

3. Dispositif selon l'une des revendications 1 ou 2, **caractérisé en ce que** le dispositif de protection (20) est en permanence aligné horizontalement sur la surface du sol par le biais d'un parallélogramme et peut être guidé à une distance constante de la surface du sol au moyen d'une roue de jauge (19).

4. Dispositif selon l'une des revendications 1 à 3, **caractérisé en ce qu'**un dispositif d'attelage, réalisé de préférence à trois points (3), est prévu à l'avant du bâti (1) pour atteler le dispositif à un véhicule tracteur.

5. Dispositif selon l'une des revendications 1 à 4, **caractérisé en ce qu'**un dispositif d'attelage, réalisé de préférence à trois points (4), est prévu à l'arrière du bâti (1) pour atteler une machine supplémentaire, en particulier la machine à planter ou à semer.

6. Dispositif selon l'une des revendications 1 à 4, **caractérisé en ce que** la machine à planter ou à semer est reliée directement au dispositif, à l'arrière celui-ci.

7. Dispositif selon l'une des revendications 1 à 6, **caractérisé en ce que** des crochets de bras inférieur (5) et un bras supérieur (6) sont prévus à l'arrière du bâti (1).

8. Dispositif selon l'une des revendications 1 à 7, **caractérisé en ce que** des moyens (7, 8, 10, 9, 11, 17) sont prévus pour transmettre la force de la prise de force du véhicule tracteur à la lame (21).

9. Dispositif selon l'une des revendications 1 à 8, **caractérisé en ce que** la lame (21) est disposée selon un angle par rapport au sol, de préférence selon un angle droit, et elle est conçue sous la forme d'une roue de coupe tournant dans le sens ou à contresens de la direction d'avancement, d'une lame circulaire tournant dans le sens ou à contresens de la direction d'avancement ou d'une lame de scie.

10. Dispositif selon l'une des revendications 1 à 9, **caractérisé en ce que** la lame (21) est réalisée sous la forme d'une roue de coupe comprenant deux disques entre lesquels est/sont disposée(s) au moins une, de préférence au moins deux et de préférence au moins trois lames de coupe (23) montées libres en rotation.

11. Dispositif selon la revendication 2 et selon l'une des revendications 3 à 10, **caractérisé en ce que** le rail de guidage (26) peut être fixé au moyen d'un raccord rapide (25) à l'extrémité arrière du dispositif de protection (20).

12. Dispositif selon l'une des revendications 1 à 11, **caractérisé en ce qu'**au moins une roue d'appui (2), de préférence deux roues d'appui (2), réglables en hauteur sont fixées au bâti (1).

13. Utilisation d'un dispositif selon l'une des revendications 1 à 12, pour, en une seule opération, entailler une couverture de matériau organique étendue au sol et pour semer ou planter à nouveau.
